(19) Europäisches Patentamt
European Patent Office
Office européen des brevets

(11) **EP 3 118 029 B1**

(12) **EUROPEAN PATENT SPECIFICATION**

(45) Date of publication and mention
of the grant of the patent:
**09.01.2019 Bulletin 2019/02**

(51) Int Cl.:
***B60C 23/04*** *(2006.01)*     ***G01L 17/00*** *(2006.01)*
***B60C 23/06*** *(2006.01)*

(21) Application number: **15762120.2**

(22) Date of filing: **12.03.2015**

(86) International application number:
**PCT/JP2015/057323**

(87) International publication number:
**WO 2015/137454 (17.09.2015 Gazette 2015/37)**

(54) **TIRE POSITION REGISTRATION SYSTEM**

REIFENPOSITIONSREGISTRIERUNGSSYSTEM

SYSTÈME D'ENREGISTREMENT DE POSITION DES PNEUS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.03.2014 JP 2014050354
07.11.2014 JP 2014227219**

(43) Date of publication of application:
**18.01.2017 Bulletin 2017/03**

(73) Proprietor: **Kabushiki Kaisha
Tokai-Rika-Denki-Seisakusho
Niwa-gun, Aichi 480-0195 (JP)**

(72) Inventors:
• **WATANABE, Naoki
Niwa-gun
Aichi 480-0195 (JP)**
• **KUMAGAI, Katsuhide
Niwa-gun
Aichi 480-0195 (JP)**
• **TSUCHIKAWA, Yuta
Niwa-gun
Aichi 480-0195 (JP)**

(74) Representative: **TBK
Bavariaring 4-6
80336 München (DE)**

(56) References cited:
**WO-A1-2013/133307      JP-A- 2002 321 511
JP-A- 2004 299 448      JP-A- 2013 082 436
US-A1- 2011 313 623      US-A1- 2012 259 507**

**Description**

TECHNICAL FIELD

The present invention relates to a tire position registration system that registers positions of tires in a receiver.

BACKGROUND ART

In the prior art, a tire position registration system registers IDs of tires of the associated vehicle. Patent document 1 describes a tire valve ID registration system that automatically registers IDs of tire valves (valve IDs) in a receiver as IDs of the associated vehicle tires without using a trigger generation device such as an initiator. Elimination of the need for an initiator that registers the valve IDs in the receiver allows for reduction in the number of components mounted in the vehicle.

Further prior art may be found in Patent Document 2, describing a system and method for performing auto-location of a wheel in a vehicle, according to the preamble of claim 1, and to a tire pressure monitoring system and method for performing auto-location of a tire pressure monitoring sensor arranged with a vehicle wheel using wheel phase and/or speed data.

PRIOR ART DOCUMENT

Patent Document 1: Japanese National Phase Laid-Open Patent Publication No. 2011-527971
Patent Document 2: US 2011/313623 A1

SUMMARY OF THE INVENTION

PROBLEMS THAT ARE TO BE SOLVED BY THE INVENTION

In such type of tire position registration system, for example, after performing tire rotation or replacing a tire with a new tire, new tire positions may not be immediately displayed on an in-vehicle instrument panel or the like when the vehicle starts to travel. This may be annoying to the user. Thus, there is a need to develop a technique that accurately determines changed tire positions and registers the tire positions in the receiver within a short period of time.

It is an object of the present invention to provide a tire position registration system that completes registration of a tire position within a short period of time.

MEANS FOR SOLVING THE PROBLEM

One aspect of a tire position registration system includes tire valves respectively arranged on tires, axle rotation detectors arranged in correspondence with axles, and a receiver. Each of the tire valves is capable of transmitting tire pressure data and capable of transmitting a radio wave including a unique valve ID when reaching a specified position on a rotation path of the corresponding tire. Each of the axle rotation detectors outputs axle rotation information that indicates a rotation position of the corresponding axle. The receiver receives the radio wave transmitted from each of the tire valves and registers the valve ID in association with a tire position. The receiver includes a position determination function unit that determines the tire positions of the tires corresponding to the valve IDs by obtaining the axle rotation information from each of the axles whenever receiving the radio wave from each of the tire valves and checking which one of the axles and the tire identified by the valve ID are synchronously rotating based on the axle rotation information of each of the axles. The position determination function unit includes a tolerance region setting unit and a position specification unit. The tolerance region setting unit estimates a parent population of the axle rotation information of each of the axles for each valve ID from a data group of the axle rotation information of each of the axles obtained for each valve ID and sets a synchronized wheel tolerance region for each parent population based on a population mean, which is a mean of the parent population. The synchronized wheel tolerance region functions as an index for determining validity of the corresponding axle rotation information. The position specification unit specifies the tire position by determining whether or not the axle rotation information obtained for each valve ID is included in the synchronized wheel tolerance region of the corresponding parent population and specifying the axle rotating in synchronization with the tire corresponding to the valve ID.

In this configuration, the candidate of the valve ID (tire) corresponding to the axle rotation information (axle) is selected based on the synchronized wheel tolerance region that has been optimized from the population mean of the parent population. Thus, the synchronization determination between the tires and the axles is performed in a more accurate manner. Consequently, the registration of the tire position is completed within a short period of time.

EFFECT OF THE INVENTION

The present invention completes registration of a tire position within a short period of time.

BRIEF DESCRIPTION OF THE DRAWINGS

Fig. 1 is a first embodiment of a tire position registration system.
Fig. 2 is a diagram showing gravitational components detected at a tire valve.
Fig. 3 is a communication sequence chart of the tire valve.
Fig. 4A is a schematic diagram of a parent population, and Fig. 4B is a histogram based on a frequency distribution of axle rotation information.
Figs. 5A to 5D are schematic diagrams showing that each tire valve transmits a radio wave at a specified position.
Figs. 6A to 6D are schematic diagrams showing parent populations that are estimated for each valve ID.
Figs. 7A to 7C are diagrams showing updates of a synchronized wheel tolerance region.
Figs. 8A to 8D are specific examples of a tire position determination.
Figs. 9A to 9D are diagrams showing that the axle rotation information of other wheels is deviated from the parent population in each valve ID.
Fig. 10 is a chart of determination logic when the synchronized wheel tolerance region is fixed in a second embodiment.
Fig. 11 is a chart showing a concept of the tire position determination of the second embodiment.
Fig. 12 is a chart of determination logic that varies the synchronized wheel tolerance region.
Fig. 13 is a graph showing changes in the synchronized wheel tolerance region when a data count increases in the axle rotation information.

EMBODIMENTS OF THE INVENTION

First Embodiment

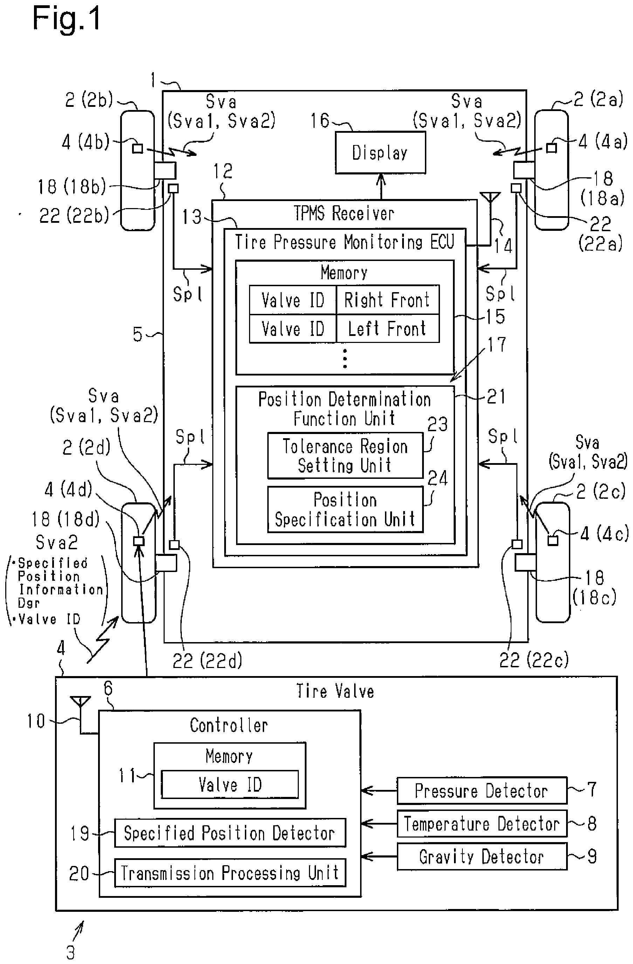

A first embodiment of a tire position registration system will now be described with reference to Figs. 1 to 9.

As shown in Fig. 1, a vehicle 1 includes a tire pressure monitoring system 3 (TPMS: tire pressure monitoring system) that monitors air pressure of tires 2 (2a to 2d). The tire pressure monitoring system 3 includes tire valves 4 (4a to 4d) respectively coupled to the tires 2a to 2d. Each tire valve 4 is coupled to an air valve of the corresponding tire 2 and functions as a tire valve sensor that includes a sensor and a communication unit. Each tire valve 4 transmits a radio wave Sva, which includes a valve ID that identifies the tire 2 to which the tire valve 4 is coupled. Each tire valve 4 transmits, for example, a tire pressure radio wave Sva1 that includes air pressure data of the corresponding tire 2 and the valve ID. A receiver 12, which is located on a vehicle body 5, receives the tire pressure radio waves Sva1 and monitors the air pressure of each tire 2.

Each tire valve 4 includes a controller 6, which controls operation of the tire valve 4, a pressure detector 7, which detects the tire pressure, a temperature detector 8, which detects the temperature of the tire 2, a gravity detector 9, which detects a gravitational component acting on the tire valve 4, and a transmission antenna 10, which is used to transmit the radio wave Sva from the tire valve 4. The controller 6 includes a memory 11. The memory 11 stores the valve ID, which is unique to the tire valve 4. The gravity detector 9 is, for example, an acceleration sensor (G sensor). The transmission antenna 10 transmits the radio wave Sva, for example, in an ultra high frequency (UHF) band.

The receiver 12 functions as a TPMS receiver. The TPMS receiver 12 receives the radio wave Sva from each tire valve 4 and monitors the air pressure of each tire 2. The TPMS receiver 12 includes a tire pressure monitoring electronic control unit (ECU) 13, which controls operation of the TPMS receiver 12, and a reception antenna 14, which is used to receive the radio waves Sva. The tire pressure monitoring ECU 13 includes a memory 15. The valve ID, which is transmitted to the TPMS receiver 12 from each tire valve 4, is associated with the tire position of the corresponding tire 2 and stored in the memory 15. The TPMS receiver 12 is connected to a display 16 that shows the monitor result of the tire pressure. The display 16 is located, for example, in an in-vehicle instrument panel.

The TPMS receiver 12 receives the tire pressure radio wave Sva1, which is transmitted from each of the tire valves 4a to 4d at a particular timing, with the reception antenna 14. The TPMS receiver 12 obtains the valve ID from the tire pressure radio wave Sva1 and verifies the valve ID. When the valve ID is verified, the TPMS receiver 12 determines the air pressure data of the tire valve 4. When the tire pressure is less than or equal to a low pressure threshold value, the TPMS receiver 12 indicates that the tire pressure is low on the display 16. The TPMS receiver 12 performs the tire pressure determination whenever receiving the tire pressure radio wave Sva1 and sequentially monitors the air pressure of the tires 2a to 2d.

The tire pressure monitoring system 3 includes a tire position registration system 17 having a tire position registration function, that is, a so-called auto-location function, that respectively associates the valve IDs of the tire valves 4a to 4d with the right front tire 2a, the left front tire 2b, the right rear tire 2c, and the left rear tire 2d and automatically registers the valve IDs in the TPMS receiver 12. The tire position registration system 17 includes a means for detecting rotation positions (rotation amounts) of axles 18 (18a to 18d) that support the tires 2 (2a to 2d) and obtains the rotation position of each axle 18 when the tire valve 4 coupled to the tire 2 reaches a specified position on the rotation path. The tire position registration system 17 specifies the axle 18 that rotates in synchronization with the tire 2 (tire valve 4) by repeating such process for a number of times and determines the positions of the tires 2a to 2d by associating the valve IDs of the tire valves 4 with the tires 2.

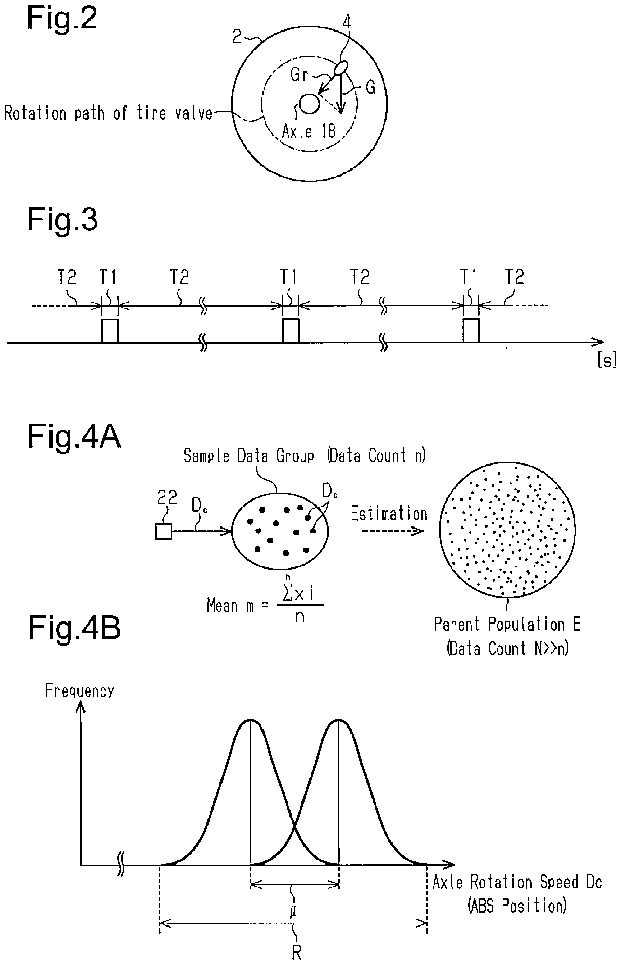

Fig. 2 shows the gravitational components detected by the gravity detector 9. The gravity detector 9 detects the gravitational component that acts on the tire valve 4 when the tire 2 rotates. The gravity detector 9 preferably detects a centripetal gravity component Gr, which is directed toward the center of the tire 2 in the radial direction from the tire valve 4 relative to the gravity G. If centrifugal force is not taken into account, for example, when the tire valve 4 is located at a peak position (position of "twelve o'clock" or "six o'clock") on the rotation path, the centripetal gravity component Gr is "-1G" or "+1G." The centripetal gravity component Gr that is detected may be a component extending in a tangential direction of the tire 2.

Fig. 3 shows a radio wave transmission sequence of the tire valve 4. The tire valve 4 operates in accordance with the radio wave transmission sequence in which a first period T1, during which the radio wave Sva is transmitted, and a second period T2, during which the radio wave Sva is not transmitted, are alternately repeated. The first period T1 is set to be relatively short. The second period T2 is set to be relatively long. The first period T1 is, for example, "one second." The second period T2 is, for example, "fifteen seconds." Thus, the tire valve 4 transmits the radio wave Sva in a limited period, which is one second, and repeats the radio wave transmission at an interval of fifteen seconds.

Referring to in Fig. 1, each tire valve 4 includes a specified position detector 19 and a transmission processing unit 20. The specified position detector 19 detects that the tire valve 4 has reached a specified position on the rotation path. The transmission processing unit 20 transmits a specified position information radio wave Sva2 as a radio wave Sva indicating that the tire valve 4 has reached the specified position. The specified position detector 19 and the transmission processing unit 20 are located, for example, in the controller 6.

The specified position detector 19 is preferably activated to detect the specified position, for example, during the first period T1. The specified position is, for example, the peak position (e.g., position of "twelve o'clock") of the tire valve 4.

When the specified position detector 19 detects the specified position, the transmission processing unit 20 preferably executes the transmission of the specified position information radio wave Sva2. The specified position information radio wave Sva2 includes the valve ID and specified position information Dgr. The specified position information Dgr is preferably peak information that indicates the time when the tire valve 4 has reached the peak position (specified position).

The tire position registration system 17 includes a position determination function unit 21 that executes tire position determination. The position determination function unit 21 is located, for example, in the tire pressure monitoring ECU 13. Whenever receiving the specified position information radio wave Sva2 from each tire valve 4, the position determination function unit 21 obtains the axle rotation information Dc of each of the axles 18a to 18d and specifies the axle rotation information Dc (i.e., axle 18) corresponding to the rotation state of the tire 2 when the tire valve 4 is located at the specified position. Thus, whenever each tire valve 4 reaches the specified position, the position determination function unit 21 determines the tire position by specifying the axle 18 that rotates in synchronization with the corresponding tire 2.

The vehicle 1 preferably includes axle rotation detectors 22 (22a to 22d) corresponding to the axles 18a to 18d. The axle rotation detectors 22a to 22d are, for example, antilock brake system (ABS) sensors located on the axles 18a to 18d. In this case, the axle rotation information Dc is, for example, a pulse count value that is output from each ABS sensor. Each axle rotation detector 22, for example, uses a sensing portion to detect a plurality (e.g., forty-eight) of teeth arranged on the axle 18 and transmits square-waveform pulse signals Spl to the TPMS receiver 12. When the position determination function unit 21 is of a type that detects both rising and falling edges of the pulse signals Spl, the position determination function unit 21 detects ninety-six pulses (count value: 0 to 95) per rotation of the tire 2.

Referring to Figs. 1, 4A, and 4B, the position determination function unit 21 includes a tolerance region setting unit 23 that estimates a parent population E of the axle rotation information Dc of each axle 18 for each valve ID from a data group of the axle rotation information Dc of the axle 18, which is obtained for each valve ID, and sets a synchronized wheel tolerance region R, which functions as an index for determining the validity of the corresponding axle rotation information Dc, for each parent population E based on a population mean μ, which is the mean of the parent population E. In the present embodiment, the parent population E having a large number of data count N is estimated from a finite data count n. The tolerance region setting unit 23 preferably updates the parent population E whenever receiving a valve ID and obtaining new axle rotation information Dc and uses the updated parent population E to update the synchronized wheel tolerance region R.

The position determination function unit 21 includes a position specification unit 24 that specifies the tire position by determining whether or not the axle rotation information Dc obtained for each valve ID is included in the synchronized wheel tolerance region R of the corresponding parent population E and specifying the axle 18 that rotates in synchronization with the tire 2 corresponding to the valve ID. For example, for the valve ID (ID1) of the right front tire valve 4a, the position specification unit 24 specifies the tire position for ID1 by determining the axle 18 having the axle rotation information Dc that is included in the synchronized wheel tolerance region R. Through the same process, the position specification unit 24 specifies the tire position for each of ID2 to ID4.

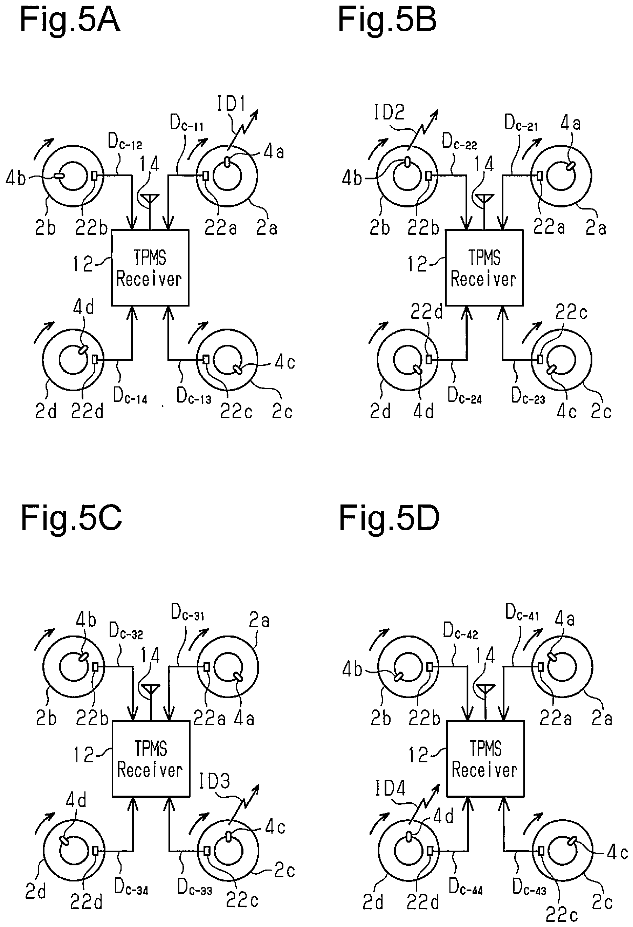

The operation of the tire position registration system 17 will now be described with reference to Figs. 5 to 9.

As shown in Fig. 5A, for example, the right front tire valve 4a transmits the specified position information radio wave Sva2 (indicated as ID1 in drawing) including ID1 and the specified position information Dgr from the transmission antenna 10 when reaching the specified position during the first period T1. The specified position information radio wave Sva may be transmitted once or a number of times during the first period T1. More specifically, the tire valve 4 may transmit the specified position information radio wave Sva2 whenever reaching the specified position during the first period T1.

Whenever receiving the specified position information radio wave Sva2, the TPMS receiver 12 obtains the axle rotation information Dc from each of the axle rotation detectors 22a to 22d. When receiving, for example, ID1 (valve ID of right front tire valve 4a), the TPMS receiver 12 obtains axle rotation information Dc-11 from the right front axle rotation detector 22a, axle rotation information Dc-12 from the left front axle rotation detector 22b, axle rotation information Dc-13 from the right rear axle rotation detector 22c, and axle rotation information Dc-14 from the left rear axle rotation detector 22d.

In the same manner, as shown in Figs. 5B to 5D, the left front tire valve 4b, the right rear tire valve 4c, and the left rear tire valve 4d transmit the specified position information radio wave Sva2 (indicated as ID2, ID3, ID4 in drawing) when reaching the specified position during the first period T1. Whenever receiving the specified position information radio wave Sva2 from each of the tire valves 4b to 4d, the TPMS receiver 12 obtains the axle rotation information Dc from each of the axle rotation detectors 22a to 22d. When receiving ID2 (valve ID of left front tire valve 4b), the TPMS receiver 12 obtains axle rotation information Dc-21, Dc-22, Dc-23, Dc-24 from the axle rotation detectors 22a to 22d. When receiving ID3 (valve ID of right rear tire valve 4c), the TPMS receiver 12 obtains axle rotation information Dc-31, Dc-32, Dc-33, Dc-34 from the axle rotation detectors 22a to 22d. When receiving ID4 (valve ID of left rear tire valve 4d), the TPMS receiver 12 obtains axle rotation information Dc-41, Dc-42, Dc-43, Dc-44 from the axle rotation detectors 22a to 22d.

The tire valves 4a to 4d each repeat the transmission of the specified position information radio wave Sva2 as described above whenever the first period T1 starts. Whenever receiving the specified position information radio wave Sva2 from the tire valves 4a to 4d, the TPMS receiver 12 obtains and accumulates the axle rotation information Dc from the axle rotation detectors 22a to 22d.

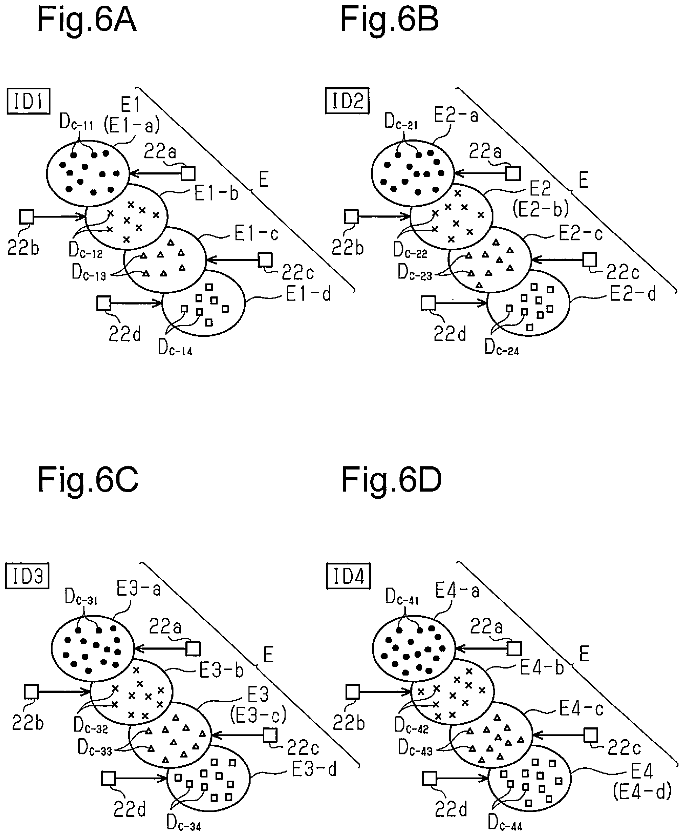

As shown in Fig. 6, whenever receiving a valve ID, the position determination function unit 21 estimates the parent population E of the axle rotation information Dc of each axle 18 for each valve ID from the data group (i.e., finite data group including variations in axle rotation information Dc) of the axle rotation information Dc of each of the axles 18 obtained from the axle rotation detectors 22a to 22d and checks which one of the axles 18 is synchronized with each tire 2. In the present example, there are sixteen parent populations E. More specifically, four parent populations E1-a, E1-b, E1-c, E1-d are estimated for ID1 in correspondence with the axle rotation information Dc of the axles 18a to 18d (axle rotation detectors 22a to 22d). In the same manner, four parent populations E2-a, E2-b, E2-c, E2-d are estimated for ID2, four parent populations E3-a, E3-b, E3-c, E3-d are estimated for ID3, and four parent populations E4-a, E4-b, E4-c, E4-d are estimated for ID4.

The parent population E where the mean value of n pieces of the axle rotation information Dc is denoted by "m" and the variance is denoted by "s$^2$" will now be described. When the population mean is denoted by "μ" and the population variance is denoted by "σ," the value obtained by expression (1) complies with the standardized normal distribution (0. 1).

Expression 1

$$\frac{m - \mu}{\sqrt{\frac{\sigma^2}{n}}} \ \ldots (1)$$

When the value obtained by expression (1) is in 95% (or 99%) of the selection region of the standard distribution, expression (2) is satisfied. Expression (3) is obtained from expression (2). Here, constant k is "1.96" when the rejection region is 5% and "2.58" when the rejection region is 1%.

Expression 2

$$-k \leqq \frac{m-\mu}{\sqrt{\frac{\sigma^2}{n}}} \leqq k \quad ... \ (2)$$

Expression 3

$$m - k\sqrt{\frac{\sigma^2}{n}} \leqq \mu \leqq m + k\sqrt{\frac{\sigma^2}{n}} \quad ... \ (3)$$

In general, the range of the population mean $\mu$ may be obtained using expression (3). However, in a typical tire position determination (auto-location), the axle rotation information Dc (pulse count of ABS sensor) does not include an absolute position and is initialized when the ignition switch of the vehicle 1 is switched on. Thus, the population mean $\mu$ cannot be specified in a normal manner. However, if it is assumed that the population variance $\sigma^2$ is known in expression (3), an estimated range of the population mean $\mu$ may be obtained from values of the existing data. Therefore, the range of the population mean $\mu$ is estimated when assuming that the population variance $\sigma^2$ is known.

The population variance $\sigma^2$ is preferably set to have different values in accordance with various travel conditions. The travel conditions are preferably determined, for example, by the tolerance region setting unit 23. Here, values of the population variance $\sigma^2$ under the various travel conditions are assumed to be stored as past data. The population variance is set, for example, to have a small value when traveling in a normal state and a large value when traveling on rough terrain.

The determination of the travel conditions is performed, for example, (I) based on the specified position information Dgr included in the radio wave Sva (specified position information radio wave Sva2) or (II) by determining variations in data of the actual axle rotation information Dc. In case (I), the specified position information radio wave Sva includes a bit flag that indicates whether or not the specified position has been detected. A high achievement rate of the bit flag indicates normal traveling. A low achievement rate of the bit flag indicates rough terrain traveling. In case (II), the normal traveling is determined when a variation index is small in all of the data (distribution of finite data count "n") in the axle rotation information Dc. The difficult traveling is determined when the variation index is large. The variation index includes, for example, a "mean of deviation" and a "standard deviation." Thus, during the normal traveling, the population variance $\sigma^2$ is preferably set to have a small value in correspondence with the small data variation. During rough terrain traveling, the population variance $\sigma^2$ is preferably set to have a large value in correspondence with the large data variation.

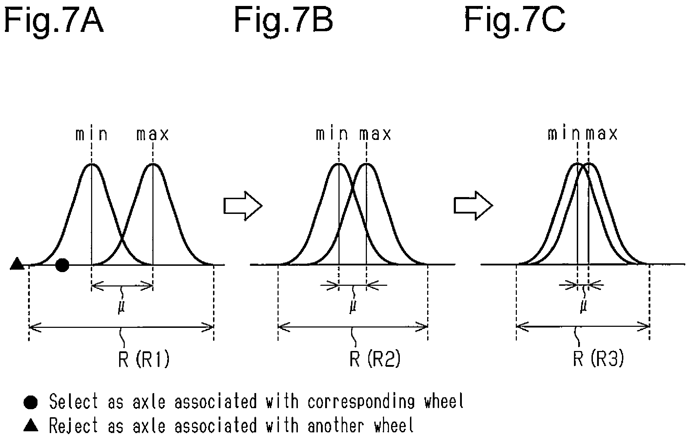

As shown in Figs. 7A to 7C, the synchronized wheel tolerance region R is set to a range including margins (in one example, $\pm 3\sigma$) before and after the population mean $\mu$. More specifically, the synchronized wheel tolerance region R is set to a range in which -3$\sigma$ is added to the minimum value of the population mean $\mu$ and +3$\sigma$ is added to the maximum value of the population mean $\mu$. When receiving the valve ID and obtaining new axle rotation information Dc, the position specification unit 24 determines whether or not the axle rotation information Dc is included in the synchronized wheel tolerance region R to check which one of the axles 18 is synchronized with the tire 2 corresponding to the presently received valve ID.

Additionally, whenever receiving the valve ID and obtaining new axle rotation information Dc, the tolerance region setting unit 23 updates the synchronized wheel tolerance region R. In the present example, whenever the axle rotation information Dc is obtained, the synchronized wheel tolerance region R is gradually changed to smaller ranges such that R1 >R2>R3 as shown in Figs. 7A to 7C. Thus, the range of the synchronized wheel tolerance region R is gradually narrowed by the updating of the synchronized wheel tolerance region R. More specifically, as the data count "n" increases in the axle rotation information Dc, the accuracy for estimating the population mean $\mu$ increases. Thus, the range for determining the synchronization between the tire 2 (tire valve 4) and the axle 18 is gradually narrowed.

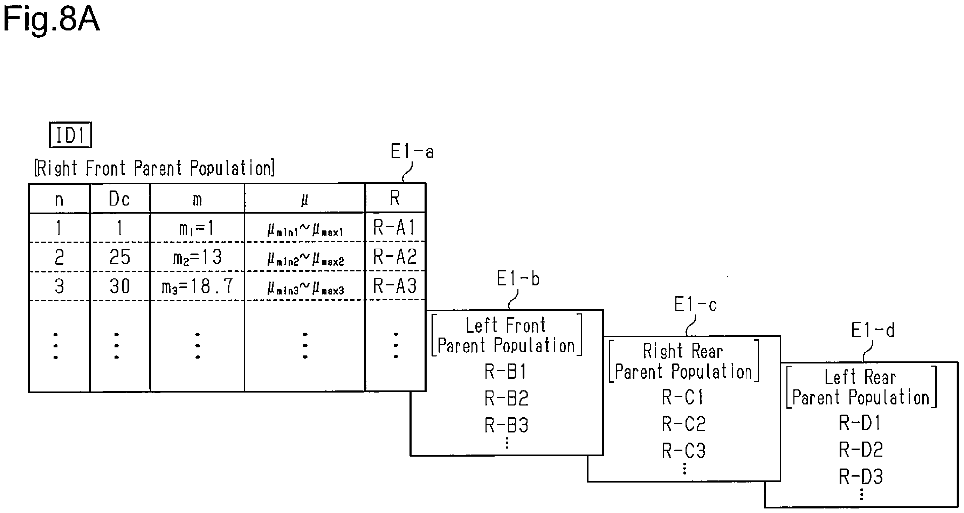

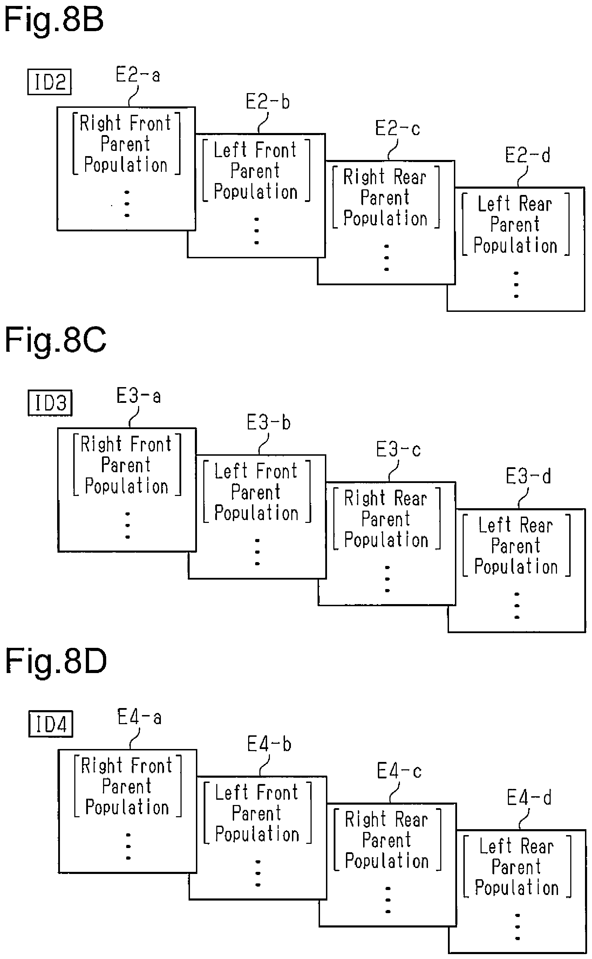

Figs. 8A to 8D show specific examples of the tire position determination. The parent population E1-a of the axle rotation information Dc obtained from the right front axle rotation detector 22a when the TPMS receiver 12 receives, for example, ID1 (valve ID of right front tire valve 4a) will now be described. When the data count n is "1" and the axle rotation information Dc of the right front axle rotation detector 22a is "1," a mean value m1 of the axle rotation information Dc is "1." The population mean $\mu$ of the parent population E1-a is set to a range from $\mu$min1 to $\mu$max1. The tolerance region setting unit 23 sets the synchronized wheel tolerance region R of the parent population E1-a to "R-A1" based on

the population mean μ. In the same manner, synchronized wheel tolerance regions R-B1, R-C1, R-D1 are set for the parent populations E1-b, E1-c, E1-d.

After a certain time, the TPMS receiver 12 again receives ID1. The tolerance region setting unit 23 updates the synchronized wheel tolerance region R based on newly obtained axle rotation information Dc. More specifically, when the data count "n" is "2," the tire position determination is not performed, and the synchronized wheel tolerance region R may be optimized. When the axle rotation information Dc of the right front axle rotation detector 22a is "25," a mean value m2 of the axle rotation information Dc is "13." The population mean μ of the parent population E1-a is updated to a range from μmin2 to μmax2. The tolerance region setting unit 23 updates the synchronized wheel tolerance region R of the parent population E1-a to "R-A2" based on the updated population mean μ. In the same manner, synchronized wheel tolerance regions R-B2, R-C2, R-D2 are set for the parent populations E1-b, E1-c, E1-d.

After a further certain time, the TPMS receiver 12 again receives ID1. The position specification unit 24 determines whether or not the axle rotation information Dc, which is obtained from the axle rotation detector 22a when ID1 is again received, is included in the synchronized wheel tolerance region R (here, R-A2) of the parent population E1-a that is set for the axle 18a. In the same manner, the position specification unit 24 determines whether or not the axle rotation information Dc, which is obtained from each of the axle rotation detectors 22b to 22d when ID1 is again received, is included in the synchronized wheel tolerance regions R-B2, R-C2, R-D2 of the respective parent populations E1-b, E1-c, E1-d. When the axle rotation information Dc of each axle 18 is included in the corresponding synchronized wheel tolerance region R, the position specification unit 24 selects ID1 as a candidate ID that corresponds to the axle 18 (tire position of axle 18). Thus, the position specification unit 24 specifies the tire position for each of ID1 to ID4 by selecting a candidate ID that corresponds to the tire position based on the comparison between the axle rotation information Dc and the synchronized wheel tolerance region R whenever receiving a valve ID.

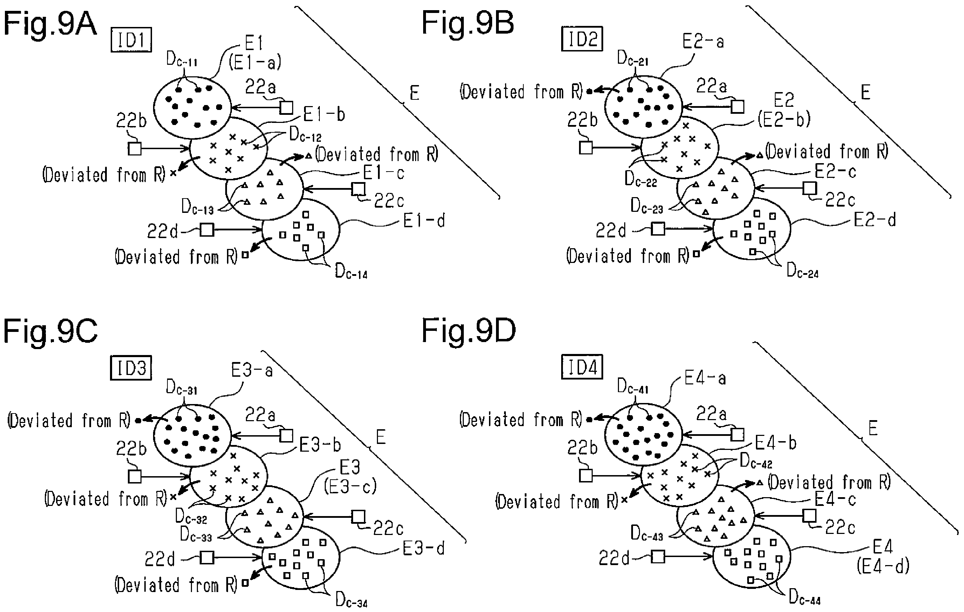

Referring to Fig. 9, the vehicle 1 has a structure in which the tires 2a to 2d independently rotate to allow the vehicle to travel, for example, along curves or the like. Thus, the timing when each of the tires 2a to 2d reaches the specified position varies before and after traveling along curves. Hence, the axle rotation information Dc of the axle 18 that rotates in synchronization with the tire 2 (tire valve 4) is included in the synchronized wheel tolerance region R of the corresponding parent population E. However, the axle rotation information Dc of the axle 18 that does not rotate in synchronization with the tire 2 (tire valve 4) does not follow the normal distribution of the corresponding population variance $\sigma^2$ and may be deviated from the synchronized wheel tolerance region R. The present example uses this principle to specify the tire position.

Referring to Figs. 8A to 8D, when the synchronization determination between the tires 2 and the axles 18 fails to specify one candidate ID that corresponds to the tire position, the tolerance region setting unit 23 again updates the synchronized wheel tolerance regions R when a valve ID is again received. If the data count "n" in the axle rotation information Dc obtained from the right front axle rotation detector 22a is "3" and the axle rotation information Dc is "30" when, for example, ID1 is again received, a mean value m3 of the axle rotation information Dc is approximately "18.7." The population mean μ of the parent population E1-a is a range from μmin3 to μmax3. The tolerance region setting unit 23 updates the synchronized wheel tolerance region R of the parent population E1-a to "R-A3" based on the population mean μ. In the same manner, the tolerance region setting unit 23 updates the synchronized wheel tolerance regions R of the parent populations E1-b, E1-c, E1-d to "R-B3," "R-C3," "R-D3," respectively.

Subsequently, whenever receiving ID1, the axle rotation information Dc is determined whether or not to be included in the corresponding synchronized wheel tolerance region R. When one candidate ID that corresponds to the tire position cannot be specified, each synchronized wheel tolerance region R is updated. Whenever receiving ID1, such a process is repeated to specify the tire position for ID1. In the same manner, the process is repeated for ID2 to ID4 to specify the tire positions for ID2 to ID4. The position specification unit 24 writes the results in which the tire positions are specified to the memory 15 and updates the tire positions. The process for determining the tire positions is preferably performed, for example, whenever the ignition switch of the vehicle 1 is switched on.

The configuration of the first embodiment has the advantages described below.

(1) When performing auto-location that specifies the tire position for each valve ID by determining the synchronization between rotation of the tires 2a to 2d (tire valves 4a to 4d) and rotation of the axles 18a to 18d, the parent population E of the axle rotation information Dc is estimated for each valve ID, and the population mean μ is calculated from the parent population E. The synchronized wheel tolerance region R is set based on the population mean μ. The axle rotation information Dc obtained when receiving a valve ID is determined whether or not to be included in the corresponding synchronized wheel tolerance region R to specify the valve IDs corresponding to the axles 18a to 18d. This specifies the tire position for each valve ID. In the present example, the synchronized wheel tolerance region R is optimized from the population mean μ, and the candidate valve ID (tire 2) that corresponds to the axle rotation information Dc (axle) is selected based on the optimized synchronized wheel tolerance region R. This is advantageous for determining the tire position for the valve ID in a more accurate manner. More specifically, the synchronization determination is performed between the tires 2 and the axles 18 in a further accurate manner. Thus, the registration of the tire position is completed within a short period of time.

(2) Each synchronized wheel tolerance region R is updated whenever receiving a valve ID and obtaining new axle rotation information Dc. Thus, the synchronized wheel tolerance region R is optimized. This is further advantageous for determining the tire position in a further accurate manner.

(3) Each synchronized wheel tolerance region R is calculated from the data count "n" in the axle rotation information Dc, the mean value "m" of the axle rotation information Dc, the population variance "$\sigma^2$," and the constant "k" of the rejection region. The synchronized wheel tolerance region R is accurately set from these parameters.

(4) Each population variance $\sigma^2$ is set to an appropriate value in accordance with the present travel condition. Thus, the population variance $\sigma^2$ is optimized. This is advantageous for setting the optimal synchronized wheel tolerance region R and therefore determining the tire position in a further accurate manner.

(5) Each tire valve 4 transmits the radio wave Sva based on the radio wave transmission sequence in which the relatively short first period T1, during which the radio wave Sva is transmitted, and the relatively long second period T2, during which the radio wave Sva is not transmitted, are alternately repeated. This shortens the period during which the tire valve 4 is activated for the radio wave transmission. Thus, the battery life of the tire valve 4 may be prolonged.

(6) Each synchronized wheel tolerance region R is set to the range including the margins (in one example, $\pm3\sigma$) before and after the population mean $\mu$. This is further advantageous for setting the synchronized wheel tolerance region R to an appropriate range.

Second Embodiment

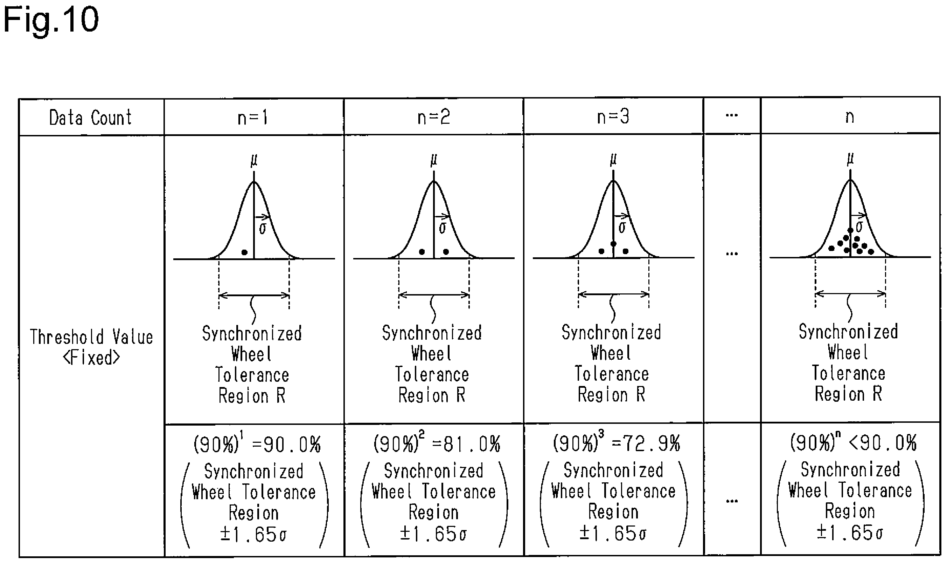

A second embodiment will now be described with reference to Figs. 10 to 13. The second embodiment differs from the first embodiment in that the process for setting the synchronized wheel tolerance region R is changed. The same reference characters are given to those components that are the same as the corresponding components of the first embodiment. Such components will not be described in detail. The differences will be described in detail.

As shown in Fig. 10, the present example of a synchronized wheel tolerance region R is set to a range that extends from the population mean "$\mu$" to "$\pm3\sigma$." When the synchronized wheel tolerance region R is set to "$\pm3\sigma$," the axle rotation information Dc (pulse data of ABS sensor) that complies with the normal distribution ($\mu$, $\sigma$) is generally included in the range of "$\pm3\sigma$" at a probability of 99.7%. It is ideally desirable that even when the data count "n" increases in the axle rotation information Dc, the probability in which the axle rotation information Dc is included in the synchronized wheel tolerance region R is maintained at "99.7%."

However, if the determination continues using a fixed synchronized wheel tolerance region R when "n" is incremented by one each time, the probability in which the axle rotation information Dc is included in the synchronized wheel tolerance region R gradually decreases to $(99.7\%)^2$, $(99.7\%)^3$, and so on each time "n" is incremented by one. Fig. 10 shows an example in which the probability in which data that complies with the normal distribution ($\mu$, $\sigma$) is included in a fixed synchronized wheel tolerance region R is "90%." Regardless of the probability, when the synchronized wheel tolerance region R is fixed, the probability of the determination gradually decreases from "99.7%" as the data count "n" increases in the axle rotation information Dc. This interferes with acquirement of the accurate determination result of the tire position.

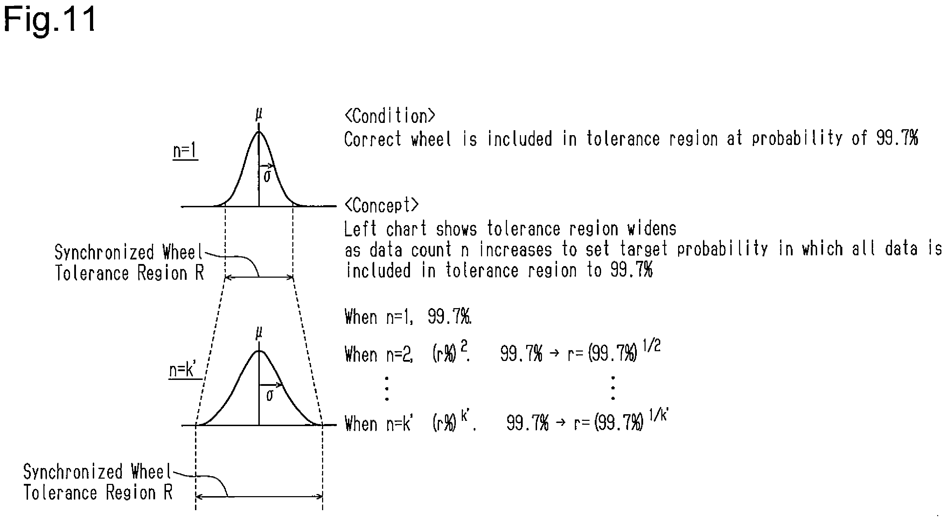

In this regard, as shown in Fig. 11, in the present example, the synchronized wheel tolerance region R is appropriately set to gradually widen as the data count "n" increases in the axle rotation information Dc so that the probability in which all of the data of the axle rotation information Dc is included in the synchronized wheel tolerance region R is set to "99.7%(=$\pm3\sigma$)," which is the target probability. More specifically, the relationship of $\pm3\sigma$=99.7% is assumed. Then, when "n=1," the synchronized wheel tolerance region R is set to a range defined by (99.7%). When "n=2," the synchronized wheel tolerance region R is set to a range defined by $(99.7\%)^{1/2}$. When "n=k'," the synchronized wheel tolerance region R is set to a range defined by $(99.7\%)^{1/k'}$.

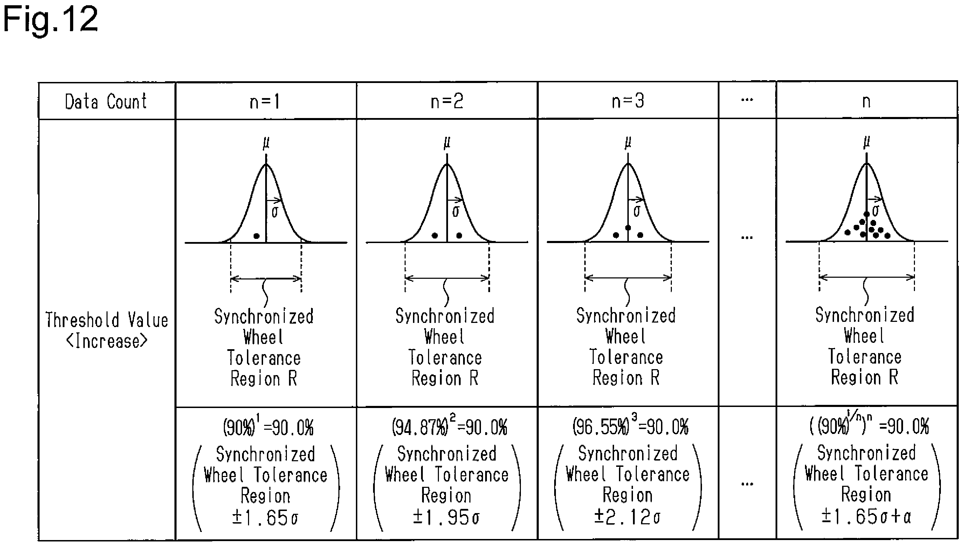

Fig. 12 shows a specific example of the operation of the position determination logic of the present example. As shown in Fig. 12, when the synchronized wheel tolerance region R gradually widens, for a set of the associated valve ID and axle 18, all of the data in the axle rotation information Dc is included in the range of the synchronized wheel tolerance region R at a target probability. This is advantageous for determining the association between the ID valves and the axles 18 in a more accurate manner.

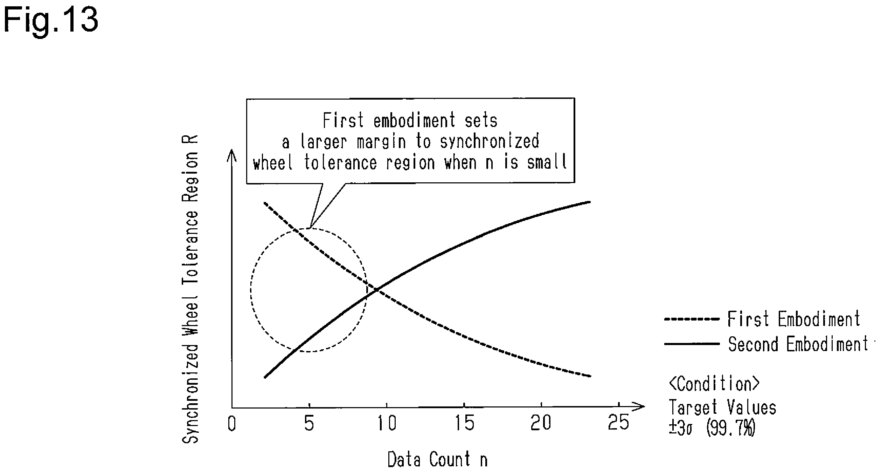

Fig. 13 shows changes in the synchronized wheel tolerance region R of the first embodiment and changes in the synchronized wheel tolerance region R of the second embodiment where the lateral axis corresponds to the data count "n" of the axle rotation information Dc and the vertical axis corresponds to the synchronized wheel tolerance region R. The first embodiment has an advantage in which the tire position is determined more quickly than the prior art. In the second embodiment, as shown in Fig. 13, "99.7%" of the probability for accurately determining the tire position is ensured because of the gradual widening of the synchronized wheel tolerance region R. Additionally, when the data count "n" is small, the synchronized wheel tolerance region R of the first embodiment is set to have a larger margin. More specifically, the second embodiment determines the tire position more quickly than the first embodiment.

The configuration of the second embodiment has the advantage described below in addition to (1), (2), (4), (5) of the first embodiment.

(7) The synchronized wheel tolerance region R is widened as the data count increases in the axle rotation information Dc so that the probability in which the axle rotation information Dc (pulse count of ABS sensor complying with normal distribution $(\mu, \sigma)$) is included in the synchronized wheel tolerance region R is set to a fixed target value (more specifically, 99.7%) even when collecting the axle rotation information Dc. This maintains the fixed probability for determining the correct wheel in the tire position determination. Thus, the determination of the tire position is accurately and quickly completed.

The above embodiments may be modified as follows.

In each embodiment, the specified position may be detected in advance before the first period T1 starts. Then, each tire valve 4 may notify the TPMS receiver 12 of information related to the specified position by transmitting the valve ID that includes the information of when the specified position was detected to the TPMS receiver 12.

In each embodiment, each tire valve 4 may have, for example, a predetermined gravity sampling timing of a fixed cycle (eighteen seconds). The radio wave transmission cycle of the tire valve 4 may be set to a predetermined number of the gravity sampling timings.

In the first embodiment, the synchronized wheel tolerance region R only needs to be set using at least the population mean $\mu$.

In each embodiment, when setting the synchronized wheel tolerance region R, the margins are not limited to "$\pm 3\sigma$" and may be changed to various values.

In the radio waves Sva of each embodiment, the radio wave (Sva1), which notifies the tire pressure, differs from the radio wave (Sva2), which notifies the specified position during auto-location. Instead, the same radio wave content may be used.

In each embodiment, the axle rotation detectors 22 transmit the axle rotation information Dc to the TPMS receiver 12 through a wire. Instead, the axle rotation information Dc may be wirelessly transmitted.

## Claims

1. A tire position registration system (17) comprising:

   tire valves (4: 4a-4d) respectively arranged on tires (2: 2a-2d) and capable of transmitting tire pressure data, wherein each of the tire valves (4: 4a-4d) is capable of transmitting a radio wave (Sva2) including a unique valve ID when reaching a specified position on a rotation path of the corresponding tire (2);
   axle rotation detectors (22: 22a-22d) arranged in correspondence with axles (18: 18a-18d), wherein each of the axle rotation detectors (22: 22a-22d) is configured to output axle rotation information (Dc) that indicates a rotation position of the corresponding axle (18); and
   a receiver (12) configured to receive the radio wave (Sva2) transmitted from each of the tire valves (4: 4a-4d) and register the valve ID in association with a tire position,
   **characterized in that**
   the receiver (12) includes a position determination function unit (21) configured to determine the tire positions of the tires (2: 2a-2d) corresponding to the valve IDs by obtaining the axle rotation information (Dc) for each of the axles (18: 18a-18d) whenever receiving the radio wave (Sva2) from each of the tire valves (4: 4a-4d) and checking which one of the axles (18: 18a-18d) and the tire (2) identified by the valve ID are synchronously rotating based on the axle rotation information (Dc) of each of the axles (18: 18a-18d), and
   the position determination function unit (21) includes

   a tolerance region setting unit (23) configured to estimate a parent population (E) of the axle rotation information (Dc) of each of the axles (18: 18a-18d) for each valve ID from a data group of the axle rotation information (Dc) of each of the axles (18: 18a-18d) obtained for each valve ID and set a synchronized wheel tolerance region (R) for each parent population (E) based on a population mean ($\mu$), which is a mean of the parent population (E), wherein the synchronized wheel tolerance region (R) functions as an index for determining validity of the corresponding axle rotation information (Dc), and
   a position specification unit (24) configured to specify the tire position by determining whether or not the axle rotation information (Dc) obtained for each valve ID is included in the synchronized wheel tolerance region (R) of the corresponding parent population (E) and specifying the axle (18) rotating in synchronization with the tire (2) corresponding to the valve ID.

2. The tire position registration system (17) according to claim 1, wherein the tolerance region setting unit (23) is configured, whenever receiving the radio wave (Sva2) and newly obtaining the axle rotation information (Dc), to update the synchronized wheel tolerance region (R) of the corresponding parent population (E) using the newly obtained axle rotation information (Dc).

3. The tire position registration system (17) according to claim 1 or 2, wherein the synchronized wheel tolerance region (R) is set based on a data count (n) in the axle rotation information (Dc), a mean value (m) of the axle rotation information (Dc), a population variance ($\sigma^2$) that is set as a known value, and a constant (K) of a rejection region.

4. The tire position registration system (17) according to claim 3, wherein the tolerance region setting unit (23) is configured to set the population variance ($\sigma^2$) to a value according to a travel condition.

5. The tire position registration system (17) according to any one of claims 1 to 4, wherein the tolerance region setting unit (23) is configured to widen the synchronized wheel tolerance region (R) as data count (n) in the axle rotation information (Dc) increases so that a probability in which the axle rotation information (Dc) is included in the synchronized wheel tolerance region (R) is set to a fixed target value even when data count (n) in the axle rotation information (Dc) increases.

6. The tire position registration system (17) according to any one of claims 1 to 5, wherein
   each of the tire valves (4: 4a-4d) is configured to transmit the radio wave (Sva2 (Sva)) in accordance with a radio wave transmission sequence in which a first period (T1), during which the radio wave (Sva2) is transmitted, and a second period (T2), during which the radio wave (Sva2) is not transmitted, are alternately repeated,
   the first period (T1) is set to be shorter than the second period (T2), and
   each of the tire valves (4: 4a-4d) is activated during the first period (T1).

7. The tire position registration system (17) according to any one of claims 1 to 6, wherein the synchronized wheel tolerance region (R) is set in a range in which a margin ($3\sigma$) is added before and after the population mean ($\mu$).

**Patentansprüche**

1. Reifenpositionserfassungssystem (17), mit:

   Reifenventilen (4: 4a-4d), die jeweils an Reifen (2: 2a-2d) angeordnet und dazu in der Lage sind, Reifendruckdaten zu übermitteln, wobei jedes der Reifenventile (4: 4a-4d) dazu in der Lage ist, bei Erreichen einer bestimmten Position auf einem Rotationsweg des entsprechenden Reifens (2) eine Funkwelle (Sva2) zu übermitteln, die eine eindeutige Ventil-ID umfasst;
   Achsenrotationsdetektoren (22: 22a-22d), die in Entsprechung mit Achsen (18: 18a-18d) angeordnet sind, wobei jeder der Achsenrotationsdetektoren (22: 22a-22d) dazu eingerichtet ist, Achsenrotationsinformationen (Dc) auszugeben, die eine Rotationsposition der entsprechenden Achse anzeigen (18); und
   einem Empfänger (12), der dazu eingerichtet ist, die von jedem der Reifenventile (4: 4a-4d) übermittelte Funkwelle (Sva2) zu empfangen und die Ventil-ID in Verbindung mit einer Reifenposition zu erfassen,
   **dadurch gekennzeichnet, dass**
   der Empfänger (12) eine Positionsbestimmungs-Funktionseinheit (21) umfasst, die dazu eingerichtet ist, die Reifenpositionen der den Ventil-IDs entsprechenden Reifen (2: 2a-2d) durch Beschaffen der Achsenrotationsinformationen (Dc) für jede der Achsen (18: 18a-18d) zu bestimmen, immer wenn die Funkwelle (Sva2) von jedem der Reifenventile (4: 4a-4d) empfangen wird, und auf der Grundlage der Achsenrotationsinformationen (Dc) jeder der Achsen (18: 18a-18d) zu überprüfen, welche der Achsen (18: 18a-18d) mit dem durch die Ventil-ID identifizierten Reifen (2) synchron rotiert, und
   die Positionsbestimmungs-Funktionseinheit (21)

   eine Toleranzbereichseinstelleinheit (23), die dazu eingerichtet ist, eine Grundgesamtheit (E) der Achsenrotationsinformationen (Dc) jeder der Achsen (18: 18a-18d) für jede Ventil-ID aus einer Datengruppe der Achsenrotationsinformationen (Dc) jeder der für jede Ventil-ID beschafften Achsen (18: 18a-18d) abzuschätzen, und einen Synchronradtoleranzbereich (R) für jede Grundgesamtheit (E) auf der Grundlage eines Grundgesamtheitsmittels ($\mu$) einzustellen, das ein Mittel der Grundgesamtheit (E) ist, wobei der Synchronradtoleranzbereich (R) als Index zur Bestimmung einer Gültigkeit der entsprechenden Achsenrotationsinformationen (Dc) fungiert, und

eine Positionsspezifikationseinheit (24) umfasst, die dazu eingerichtet ist, die Reifenposition durch eine Bestimmung, ob die für jede Ventil-ID erlangten Achsenrotationsinformationen (Dc) in dem Synchronradtoleranzbereich (R) der entsprechenden Grundgesamtheit (E) umfasst sind oder nicht, und durch die Angabe der Achse (18) zu spezifizieren, die mit dem der Ventil-ID entsprechenden Reifen (2) synchron rotiert.

2. Reifenpositionserfassungssystem (17) nach Anspruch 1, wobei die Toleranzbereichseinstelleinheit (23) dazu eingerichtet ist, immer wenn die Funkwelle (Sva2) empfangen wird und Achsenrotationsinformationen (Dc) neu erlangt werden, den Synchronradtoleranzbereich (R) der entsprechenden Grundgesamtheit (E) unter Verwendung der neu erlangten Achsenrotationsinformationen (Dc) zu aktualisieren.

3. Reifenpositionserfassungssystem (17) nach Anspruch 1 oder 2, wobei der Synchronradtoleranzbereich (R) auf der Grundlage einer Datenanzahl (n) der Achsenrotationsinformationen (Dc), eines Mittelwertes (m) der Achsenrotationsinformationen (Dc), einer Grundgesamtheitsvarianz ($\sigma^2$), die als bekannter Wert eingestellt ist, und einer Konstante (K) eines Ablehnungsbereiches eingestellt ist.

4. Reifenpositionserfassungssystem (17) nach Anspruch 3, wobei die Toleranzbereichseinstelleinheit (23) dazu eingerichtet ist, die Grundgesamtheitsvarianz ($\sigma^2$) auf einen Wert entsprechend einem Fahrzustand einzustellen.

5. Reifenpositionserfassungssystem (17) nach einem der Ansprüche 1 bis 4, wobei die Toleranzbereichseinstelleinheit (23) dazu eingerichtet ist, den Synchronradtoleranzbereich (R) mit einer ansteigenden Datenanzahl (n) der Achsenrotationsinformationen (Dc) derart zu erweitern, dass eine Wahrscheinlichkeit, mit der die Achsenrotationsinformationen (Dc) in dem Synchronradtoleranzbereich (R) umfasst sind, auf einen festen Zielwert eingestellt ist, auch falls die Datenanzahl (n) der Achsenrotationsinformationen (Dc) ansteigt.

6. Reifenpositionserfassungssystem (17) nach einem der Ansprüche 1 bis 5, wobei
jedes der Reifenventile (4: 4a-4d) dazu eingerichtet ist, die Funkwelle (Sva2 (Sva)) in Übereinstimmung mit einer Funkwellenübermittlungsabfolge zu übermitteln, bei der eine erste Zeitdauer (T1), während der die Funkwelle (Sva2) übermittelt wird, und eine zweite Zeitdauer (T2), während der die Funkwelle (Sva2) nicht übermittelt wird, abwechselnd wiederholt werden,
wobei die erste Zeitdauer (T1) kürzer als die zweite Zeitdauer (T2) eingestellt wird, und
jedes der Reifenventile (4: 4a-4d) während der ersten Zeitdauer (T1) aktiviert wird.

7. Reifenpositionserfassungssystem (17) nach einem der Ansprüche 1 bis 6, wobei der Synchronradtoleranzbereich (R) in einem Bereich eingestellt ist, bei dem vor und nach dem Grundgesamtheitsmittel ($\mu$) eine Spanne ($3\sigma$) hinzugefügt ist.

## Revendications

1. Système d'enregistrement de position de pneus (17) qui comprend :

des valves de pneus (4 : 4a à 4d) respectivement agencées sur des pneus (2 : 2a à 2d) et capables de transmettre des données de pression de pneus, dans lequel chacune des valves de pneus (4 : 4a à 4d) est capable de transmettre une onde radio (Sva2) qui comprend un identifiant de valve unique lorsqu'elle atteint une position spécifiée sur un trajet de rotation du pneu (2) correspondant ;
des détecteurs de rotation d'essieux (22 : 22a à 22d) agencés en correspondance avec les essieux (18 : 18a à 18d), dans lequel chacun des détecteurs de rotation d'essieux (22 : 22a à 22d) est configuré pour délivrer des informations de rotation d'essieu (Dc) qui indiquent une position de rotation de l'essieu (18) correspondant ; et
un récepteur (12) configuré pour recevoir l'onde radio (Sva2) transmise par chacune des valves de pneus (4 : 4a à 4d) et enregistrer l'identifiant de valve en association avec une position de pneu,
**caractérisé en ce que**
le récepteur (12) comprend une unité fonctionnelle de détermination de position (21) configurée pour déterminer les positions de pneu des pneus (2 : 2a à 2d) correspondant aux identifiants de valves en obtenant les informations de rotation d'essieu (Dc) pour chacun des essieux (18 : 18a à 18d) à chaque fois que l'onde radio (Sva2) est reçue de chacune des valves de pneus (4 : 4a à 4d) et en vérifiant lequel des essieux (18 : 18a à 18d) et le pneu (2) identifié par l'identifiant de valve tournent en synchronisation sur la base des informations de rotation d'essieu (Dc) de chacun des essieux (18 : 18a à 18d), et

l'unité fonctionnelle de détermination de position (21) comprend

une unité d'établissement de région de tolérance (23) configurée pour estimer une population parente (E) des informations de rotation d'essieu (Dc) de chacun des essieux (18 : 18a à 18d) pour chaque identifiant de valve à partir d'un groupe de données des informations de rotation d'essieu (Dc) de chacun des essieux (18 : 18a à 18d) obtenues pour chaque identifiant de valve et établir une région de tolérance de roue synchronisée (R) pour chaque population parente (E) sur la base d'une moyenne de population (μ), qui est une moyenne de la population parente (E), dans lequel la région de tolérance de roue synchronisée (R) fonctionne comme un index pour déterminer la validité des informations de rotation d'essieu (Dc) correspondantes, et

une unité de spécification de position (24) configurée pour spécifier la position de pneu en déterminant si, oui ou non, les informations de rotation d'essieu (Dc) obtenues pour chaque identifiant de valve sont incluses dans la région de tolérance de roue synchronisée (R) de la population parente (E) correspondante et spécifier l'essieu (18) qui tourne en synchronisation avec le pneu (2) correspondant à l'identifiant de valve.

2. Système d'enregistrement de position de pneus (17) selon la revendication 1, dans lequel l'unité d'établissement de région de tolérance (23) est configurée, à chaque réception de l'onde radio (Sva2) et nouvelle obtention des informations de rotation d'essieu (Dc), pour mettre à jour la région de tolérance de roue synchronisée (R) de la population parente (E) correspondante en utilisant les informations de rotation d'essieu (Dc) nouvellement obtenues.

3. Système d'enregistrement de position de pneus (17) selon la revendication 1 ou 2, dans lequel la région de tolérance de roue synchronisée (R) est établie sur la base d'un compte de données (n) dans les informations de rotation d'essieu (Dc), d'une valeur moyenne (m) des informations de rotation d'essieu (Dc), d'une variance de population ($\sigma^2$) qui est fixée en tant que valeur connue, et d'une constante (K) d'une région de réjection.

4. Système d'enregistrement de position de pneus (17) selon la revendication 3, dans lequel l'unité d'établissement de région de tolérance (23) est configurée pour établir la variance de population ($\sigma^2$) à une valeur conformément à une condition de déplacement.

5. Système d'enregistrement de position de pneus (17) selon l'une quelconque des revendications 1 à 4, dans lequel l'unité d'établissement de région de tolérance (23) est configurée pour agrandir la région de tolérance de roue synchronisée (R) alors que le compte de données (n) dans les informations de rotation d'essieu (Dc) augmente de sorte qu'une probabilité que les informations de rotation d'essieu (Dc) soient incluses dans la région de tolérance de roue synchronisée (R) soit établie à une valeur cible fixe même lorsque le compte de données (n) dans les informations de rotation d'essieu (Dc) augmente.

6. Système d'enregistrement de position de pneus (17) selon l'une quelconque des revendications 1 à 5, dans lequel chacune des valves de pneus (4 : 4a à 4d) est configurée pour transmettre l'onde radio (Sva2 (Sva)) conformément à une séquence de transmission d'onde radio dans laquelle une première période (T1), pendant laquelle l'onde radio (Sva2) est transmise, et une deuxième période (T2), pendant laquelle l'onde radio (Sva2) n'est pas transmise, sont répétées alternativement,

la première période (T1) est établie de manière à être plus courte que la deuxième période (T2), et

chacune des valves de pneus (4 : 4a à 4d) est activée pendant la première période (T1).

7. Système d'enregistrement de position de pneus (17) selon l'une quelconque des revendications 1 à 6, dans lequel la région de tolérance de roue synchronisée (R) est établie dans une plage dans laquelle une marge (3σ) est ajoutée avant et après la moyenne de population (μ).

# Fig.1

2 (2b)

4 (4b)

18 (18b)

22 (22b)

Sva
(Sva1, Sva2)

Sva
(Sva1, Sva2)

16

Display

2 (2a)

4 (4a)

18
(18a)

22
(22a)

12

13

Sp l

5

TPMS Receiver

Tire Pressure Monitoring ECU

**Memory**

| Valve ID | Right Front |
|----------|-------------|
| Valve ID | Left Front |

⋮

Position Determination
Function Unit

Tolerance Region
Setting Unit

Position
Specification Unit

14

Sp l

15

17

21

23

24

Sva
(Sva1, Sva2)

2 (2d)

4 (4d)

18 (18d)

Sva2

⎛·Specified
Position
Information
Dgr
·Valve ID⎞

4

Sp l

Sp l

Sva
(Sva1, Sva2)

2 (2c)

4 (4c)

18
(18c)

22 (22d)

22 (22c)

Tire Valve

10

6

Controller

11

19

20

**Memory**

Valve ID

Specified Position Detector

Transmission Processing Unit

Pressure Detector

Temperature Detector

Gravity Detector

7

8

9

3

# Fig.2

Rotation path of tire valve

# Fig.3

# Fig.4A

Sample Data Group (Data Count n)

$$\text{Mean } m = \frac{\sum_{i}^{n} x_i}{n}$$

Estimation

Parent Population E
(Data Count $N \gg n$)

# Fig.4B

# Fig.5A

# Fig.5B

# Fig.5C

# Fig.5D

# Fig.6A

ID1

$D_{c-11}$ $E1$ $(E1-a)$

22a

$E$

$E1-b$

22b

$D_{c-12}$

$E1-c$

$D_{c-13}$

22c

22d

$E1-d$

$D_{c-14}$

# Fig.6B

ID2

$D_{c-21}$ $E2-a$

22a

$E$

$E2$ $(E2-b)$

22b

$D_{c-22}$

$E2-c$

$D_{c-23}$

22c

22d

$E2-d$

$D_{c-24}$

# Fig.6C

ID3

$D_{c-31}$ $E3-a$

22a

$E$

$E3-b$

22b

$D_{c-32}$

$E3$ $(E3-c)$

$D_{c-33}$

22c

22d

$E3-d$

$D_{c-34}$

# Fig.6D

ID4

$D_{c-41}$ $E4-a$

22a

$E$

$E4-b$

22b

$D_{c-42}$

$E4-c$

$D_{c-43}$

22c

22d

$E4$ $(E4-d)$

$D_{c-44}$

Fig.7A    Fig.7B    Fig.7C

● Select as axle associated with corresponding wheel
▲ Reject as axle associated with another wheel

# Fig.8A

ID1

[Right Front Parent Population]                                                    E1-a

| n | Dc | m | $\mu$ | R |
|---|----|----|----|---|
| 1 | 1 | $m_1 = 1$ | $\mu_{min1} \sim \mu_{max1}$ | R-A1 |
| 2 | 25 | $m_2 = 13$ | $\mu_{min2} \sim \mu_{max2}$ | R-A2 |
| 3 | 30 | $m_3 = 18.7$ | $\mu_{min3} \sim \mu_{max3}$ | R-A3 |
| ⋮ | ⋮ | ⋮ | ⋮ | ⋮ |

E1-b

$$\left[\begin{array}{c} \text{Left Front} \\ \text{Parent Population} \end{array}\right]$$

R-B1
R-B2
R-B3
⋮

E1-c

$$\left[\begin{array}{c} \text{Right Rear} \\ \text{Parent Population} \end{array}\right]$$

R-C1
R-C2
R-C3
⋮

E1-d

$$\left[\begin{array}{c} \text{Left Rear} \\ \text{Parent Population} \end{array}\right]$$

R-D1
R-D2
R-D3
⋮

EP 3 118 029 B1

# Fig.8B

ID2　　E2-a

E2-b

E2-c

E2-d

$\begin{bmatrix} \text{Right Front} \\ \text{Parent} \\ \text{Population} \end{bmatrix}$
⋮

$\begin{bmatrix} \text{Left Front} \\ \text{Parent} \\ \text{Population} \end{bmatrix}$
⋮

$\begin{bmatrix} \text{Right Rear} \\ \text{Parent} \\ \text{Population} \end{bmatrix}$
⋮

$\begin{bmatrix} \text{Left Rear} \\ \text{Parent} \\ \text{Population} \end{bmatrix}$
⋮

# Fig.8C

ID3　　E3-a

E3-b

E3-c

E3-d

$\begin{bmatrix} \text{Right Front} \\ \text{Parent} \\ \text{Population} \end{bmatrix}$
⋮

$\begin{bmatrix} \text{Left Front} \\ \text{Parent} \\ \text{Population} \end{bmatrix}$
⋮

$\begin{bmatrix} \text{Right Rear} \\ \text{Parent} \\ \text{Population} \end{bmatrix}$
⋮

$\begin{bmatrix} \text{Left Rear} \\ \text{Parent} \\ \text{Population} \end{bmatrix}$
⋮

# Fig.8D

ID4　　E4-a

E4-b

E4-c

E4-d

$\begin{bmatrix} \text{Right Front} \\ \text{Parent} \\ \text{Population} \end{bmatrix}$
⋮

$\begin{bmatrix} \text{Left Front} \\ \text{Parent} \\ \text{Population} \end{bmatrix}$
⋮

$\begin{bmatrix} \text{Right Rear} \\ \text{Parent} \\ \text{Population} \end{bmatrix}$
⋮

$\begin{bmatrix} \text{Left Rear} \\ \text{Parent} \\ \text{Population} \end{bmatrix}$
⋮

EP 3 118 029 B1

# Fig.9A

ID1

Dc-11   E1
        (E1-a)
              22a
22b                E1-b
                 Dc-12
(Deviated from R)×        →△ (Deviated from R)
                      E1-c
      Dc-13           22c
22d                E1-d
(Deviated from R)□
              Dc-14

# Fig.9B

ID2

        Dc-21   E2-a
                    22a
(Deviated from R)            E2
22b                      (E2-b)
                   →△ (Deviated from R)
      Dc-22           E2-c
                      22c
      Dc-23           E2-d
22d
(Deviated from R)□
                 Dc-24

# Fig.9C

ID3

        Dc-31   E3-a
                    22a
(Deviated from R)            E3-b
22b
                      E3
(Deviated from R)×        (E3-c)
      Dc-32           22c
      Dc-33           E3-d
22d
(Deviated from R)□
                 Dc-34

# Fig.9D

ID4

        Dc-41   E4-a
                    22a
(Deviated from R)            E4-b
22b                   Dc-42
                   →△ (Deviated from R)
(Deviated from R)×        E4-c
      Dc-43           22c
                      E4
22d                 (E4-d)
                 Dc-44

# Fig.10

| Data Count | n=1 | n=2 | n=3 | ⋯ | n |
|---|---|---|---|---|---|
| Threshold Value <Fixed> | Synchronized Wheel Tolerance Region R | Synchronized Wheel Tolerance Region R | Synchronized Wheel Tolerance Region R | ⋯ | Synchronized Wheel Tolerance Region R |
| | $(90\%)^1 = 90.0\%$ $\left(\begin{array}{c}\text{Synchronized}\\ \text{Wheel Tolerance}\\ \text{Region}\\ \pm 1.65\sigma\end{array}\right)$ | $(90\%)^2 = 81.0\%$ $\left(\begin{array}{c}\text{Synchronized}\\ \text{Wheel Tolerance}\\ \text{Region}\\ \pm 1.65\sigma\end{array}\right)$ | $(90\%)^3 = 72.9\%$ $\left(\begin{array}{c}\text{Synchronized}\\ \text{Wheel Tolerance}\\ \text{Region}\\ \pm 1.65\sigma\end{array}\right)$ | ⋯ | $(90\%)^n < 90.0\%$ $\left(\begin{array}{c}\text{Synchronized}\\ \text{Wheel Tolerance}\\ \text{Region}\\ \pm 1.65\sigma\end{array}\right)$ |

EP 3 118 029 B1

# Fig.11

n=1

Synchronized Wheel
Tolerance Region R

n=k'

Synchronized Wheel
Tolerance Region R

$\mu$

$\sigma$

$\mu$

$\sigma$

<Condition>
Correct wheel is included in tolerance region at probability of 99.7%

<Concept>
Left chart shows tolerance region widens
as data count n increases to set target probability in which all data is
included in tolerance region to 99.7%

When n=1, 99.7%.

When n=2, $(r\%)^2$. 99.7% → $r = (99.7\%)^{1/2}$

$\vdots$

When n=k', $(r\%)^{k'}$. 99.7% → $r = (99.7\%)^{1/k'}$

EP 3 118 029 B1

# Fig.12

EP 3 118 029 B1

| Data Count | n=1 | n=2 | n=3 | ... | n |
|---|---|---|---|---|---|
| Threshold Value \<Increase\> | Synchronized Wheel Tolerance Region R | Synchronized Wheel Tolerance Region R | Synchronized Wheel Tolerance Region R | ... | Synchronized Wheel Tolerance Region R |
| | $(90\%)^1 = 90.0\%$ $\begin{pmatrix} \text{Synchronized} \\ \text{Wheel Tolerance} \\ \text{Region} \\ \pm 1.65\sigma \end{pmatrix}$ | $(94.87\%)^2 = 90.0\%$ $\begin{pmatrix} \text{Synchronized} \\ \text{Wheel Tolerance} \\ \text{Region} \\ \pm 1.95\sigma \end{pmatrix}$ | $(96.55\%)^3 = 90.0\%$ $\begin{pmatrix} \text{Synchronized} \\ \text{Wheel Tolerance} \\ \text{Region} \\ \pm 2.12\sigma \end{pmatrix}$ | ... | $((90\%)^{1/n})^n = 90.0\%$ $\begin{pmatrix} \text{Synchronized} \\ \text{Wheel Tolerance} \\ \text{Region} \\ \pm 1.65\sigma + \alpha \end{pmatrix}$ |

# Fig.13

First embodiment sets
a larger margin to synchronized
wheel tolerance region when n is small

First Embodiment

Second Embodiment

<Condition>
Target Values
±3σ (99.7%)

Synchronized Wheel Tolerance Region R

Data Count n

0    5    10    15    20    25

EP 3 118 029 B1

**EP 3 118 029 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011527971 A
- US 2011313623 A1